**Europäisches Patentamt**

**European Patent Office**

**Office européen des brevets**

(19)

(11) Veröffentlichungsnummer: **0 067 972**

**A1**

(12)

# EUROPÄISCHE PATENTANMELDUNG

(21) Anmeldenummer: 82104613.3

(22) Anmeldetag: 27.05.82

(51) Int. Cl.³: **G 02 B 7/26**
**G 02 B 5/176**

(30) Priorität: 09.06.81 DE 3122781

(43) Veröffentlichungstag der Anmeldung:
29.12.82 Patentblatt 82/52

(84) Benannte Vertragsstaaten:
AT CH DE FR GB IT LI NL

(71) Anmelder: Licentia Patent-Verwaltungs-GmbH
Theodor-Stern-Kai 1
D-6000 Frankfurt/Main 70(DE)

(72) Erfinder: Hillerich, Bernd, Dipl.-Phys.
Haldenweg 2
D-7906 Blaustein(DE)

(74) Vertreter: Schickle, Gerhard, Dipl.-Ing. et al,
Licentia Patent-Verwaltungs-GmbH Theodor-Stern-Kai
1
D-6000 Frankfurt/Main 70(DE)

(54) Wellenlängenmultiplexer bzw. Wellenlängendemultiplexer.

(57) Die Erfindung betrifft einen einfach herstellbaren Wellenlängenmultiplexer bzw.-demultiplexer, der eine einfach zu justierende anamorphotisch abbildende Ein- bzw. Auskoppeloptik besitzt, insbesondere für Lichtwellenleiter. Diese Koppeloptik ermöglicht insbesondere eine nahezu beliebige Anzahl von ankommenden und/oder abgehenden Lichtwellenleitern.

FIG.1

EP 0 067 972 A1

Licentia Patent-Verwaltungs-GmbH
Theodor-Stern-Kai 1
D-6000 Frankfurt (Main) 70

Ulm       04.06.81
Z 13 PTL-UL/Ja/rß
UL 8.1/48.

<u>Beschreibung</u>

"Wellenlängenmultiplexer bzw. Wellenlängendemultiplexer"

Die Erfindung betrifft einen Wellenlängenmultiplexer bzw.
-demultiplexer nach dem Oberbegriff des Patentanspruchs 1.

Die Erfindung betrifft insbesondere optische Wellenlängenmultiplexer bzw. -demultiplexer, die für die optische Nachrichtenübertragungstechnik, insbesondere unter Verwendung
von Lichtwellenleitern, anwendbar sind. Ein optischer Wellenlängenmultiplexer bewirkt, daß mehrere optische Informationskanäle, beispielsweise im wesentlichen monochromatisches Licht unterschiedlicher Wellenlänge führende optische Glasfasern, zu einem optischen Informationskanal,
beispielsweise ebenfalls eine optische Glasfaser, zusammengefaßt werden. Ein optischer Wellenlängendemultiplexer bewirkt das Gegenteil, also eine Aufteilung eines optischen
Informationskanales, in dem ein Wellenlängengemisch vor-

...

handen ist, in mehrere optische Informationskanäle. Derartige optische Anordnungen verwenden ein wellenlängenselektives optisches Bauelement, z.B. ein optisches Beugungsgitter. Eine Schwierigkeit besteht darin, den optischen Strahlengang der verwendeten Bauelemente, z.B. Beugungsgitter bzw. Glasfaser, möglichst mit einfachen und billig herstellbaren Mitteln im wesentlichen verlustlos aneinander anzupassen. Aus der Zeitschrift Electronics Letters (1980), Vol. 16, Nr. 3, Seiten 106 bis 108 ist eine derartige Anordnung bekannt, die ein hohlspiegelartig gewölbtes, reflektierendes Beugungsgitter enthält. Ein derartiges optisches Beugungsgitter ist schwierig herstellbar und daher sehr kostspielig. Aus der genannten Zeitschrift, Seiten 108 bis 109, ist weiterhin eine Anordnung bekannt, die zwar ein einfach herstellbares ebenes optisches Beugungsgitter enthält, jedoch schwierig einzustellende Linsenkombinationen als Anpassungsoptik an weiterführende Lichtwellenleiter.

Der Erfindung liegt daher die Aufgabe zugrunde, einfach und kostengünstig herstellbare Wellenlängenmultiplexer bzw. Wellenlängendemultiplexer anzugeben, die eine weitgehend verlustlose Ankopplung an möglicherweise unterschiedliche Lichtwellenleiter gestatten, und die im wesentlichen luftstreckenfrei herstellbar sind.

Diese Aufgabe wird erfindungsgemäß durch die im kennzeichnenden Teil des Patentanspruchs 1 angegebenen Merkmale gelöst. Vorteilhafte Ausgestaltungen und Weiterbildungen sind den Unteransprüchen entnehmbar.

Ein erster Vorteil der Erfindung besteht darin, daß die Anzahl der Eingangs- und/oder Ausgangslichtwellenleiter weit-

...

gehend beliebig wählbar ist.

Ein zweiter Vorteil besteht darin, daß ein Aufbau möglich ist, der an einen weiten Wellenlängenbereich anpaßbar ist.

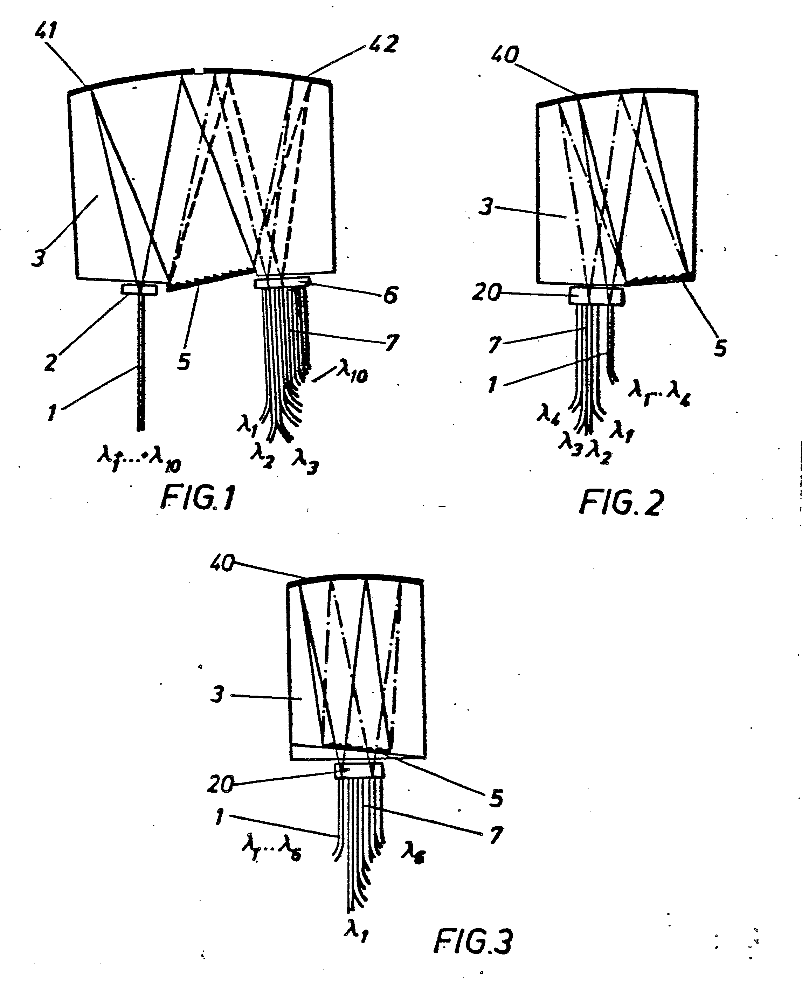

Die Erfindung wird im folgenden anhand von Ausführungsbeispielen unter Bezugnahme auf die schematischen Zeichnungen näher erläutert. Da sich die erfindungsgemäßen Wellenlängenmultiplexer bzw. -demultiplexer im wesentlichen lediglich durch die Ausbreitungsrichtung der verwendeten Strahlung unterscheiden, wird die Erfindung im folgenden anhand der FIG. 1 bis 5 für beispielhafte Wellenlängendemultiplexer erläutert, wobei die verwendete Strahlung beispielsweise Licht im nahen Infrarot ist.

Gemäß FIG. 1 wird das in mindestens einem Lichtwellenleiter 1, z.B. einer optischen Glasfaser, ankommende Lichtgemisch, das die Wellenlängen $\lambda_1$ bis $\lambda_{10}$ enthält, zunächst mittels einer ersten anamorphotisch abbildenden Anordnung 2, 41, die beispielsweise aus einer ersten Kreiszylinderlinse 2 sowie einem ersten zylinderförmigen Hohlspiegel 41 besteht auf ein einfach herstellbares ebenes Reflexionsbeugungsgitter 5 abgebildet. Eine derartige, einfach zu justierende anamorphotisch abbildende Anordnung ist vorteilhafterweise sehr anpassungsfähig, z.B. an die Querschnittsform des Lichtwellenleiters und/oder die räumliche Lage des Beugungsgitters 5. Das von dem Beugungsgitter 5, vorzugsweise ein sogenanntes "blazed"-Beugungsgitter, in einzelne, räumlich getrennte Komponenten aufgespaltene Licht wird mittels einer zweiten anamorphotisch abbildenden Anordnung 42, 6, die beispielsweise aus einem zweiten zylinderförmigen Hohlspiegel 42 sowie einer zweiten Kreiszylinderlinse 6 besteht, in eine Vielzahl weiterführender Lichtweg 7 derart

...

eingekoppelt, daß jeder Lichtweg 7 im wesentlichen Licht einer Wellenlänge, z.B. der Wellenlänge $\lambda_2$, weiterleitet. Derartige anamorphotische Anordnungen ermöglichen insbesondere eine verlustarme Ankopplung von Lichtwegen 1, 7, die unterschiedliche Querschnitte besitzen. Mit dem Bezugszeichen 3 ist eine im wesentlichen transparente Platte bezeichnet, die als verbindender Lichtweg sowie als Grundkörper der beschriebenen Anordnung dient.

In dem Ausführungsbeispiel gemäß FIG. 2 sind die Lichtwege 1 bzw. 7 zu einem beispielsweise flachkabelähnlichen Bauelement zusammengefaßt. Dieses ermöglicht vorteilhafterweise die Verwendung von lediglich einer Kreiszylinderlinse 20, die die Kreiszylinderlinsen 2 bzw. 6 ersetzt, sowie von lediglich einem Hohlspiegel 40, der die Hohlspiegel 41 bzw. 42 ersetzt.

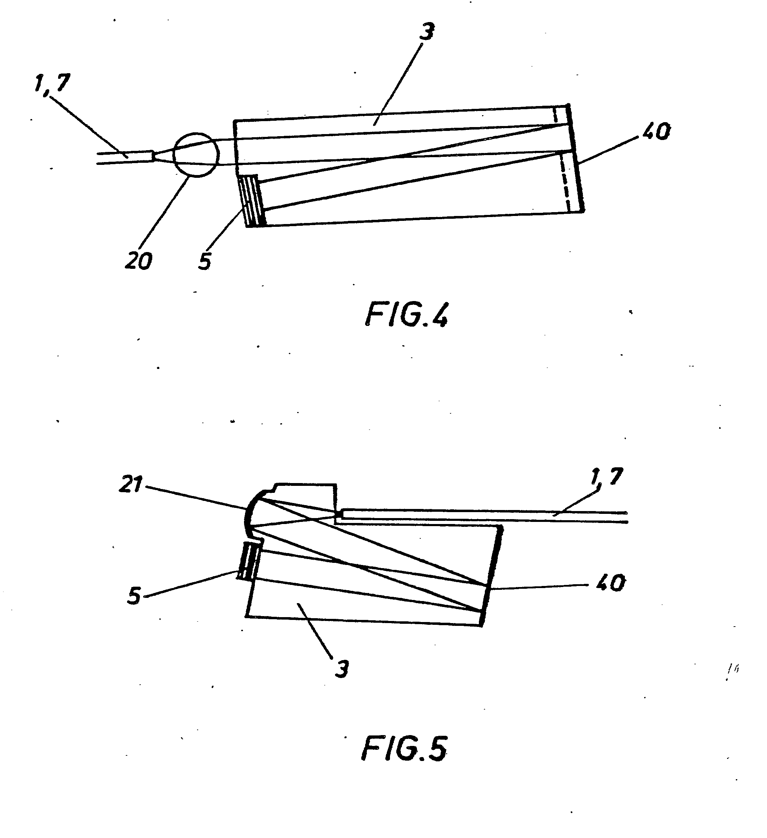

In den in FIG. 1 bzw. 2 dargestellten Ausführungsbeispielen treten bei sphärischen Hohlspiegeln 41, 42 bzw. 40 Abbildungsfehler (Astigmatismus) auf, die möglicherweise zu erhöhten Koppelverlusten führen. Dieses ist darin begründet, daß die Kreiszylinderlinsen 2, 6 bzw. 20 räumlich neben dem Beugungsgitter 5 angeordnet sind; die Längsachse(n) der Kreiszylinderlinsen(n) sowie die optische(n) Achse(n) innerhalb der Platte 3 liegen im wesentlichen in einer Ebene. Ein derartiger möglicher Nachteil ist weitgehend vermeidbar gemäß einer Anordnung, die in den FIG. 3 und 4 dargestellt ist. Dabei zeigt FIG. 4 eine Seitenansicht der in FIG. 3 dargestellten Anordnung. Bei einem Wellenlängenmultiplexer bzw. -demultiplexer gemäß der FIG. 3 bzw. 4 ist daher der Strahlengang derart gewählt, daß die Kreiszylinderlinse 20 räumlich oberhalb oder unterhalb des Beugungsgitters 5 liegt; die Längsachse der Kreiszylinderlinse 20 sowie die optischen Achsen innerhalb der Platte 3 liegen in

. . .

verschiedenen Ebenen.

In einem weiteren, nicht dargestellten Ausführungsbeispiel ist mindestens eine Kreiszylinderlinse 20 mit einem radiusabhängigen Brechungsindex vorhanden. Ein derartiges Ausführungsbeispiel hat insbesondere den Vorteil, daß alle verwendeten optischen Bauteile zu einer mechanisch stabilen, luftstreckenfreien Anordnung vergossen und/oder zusammengekittet werden können, wobei der Brechungsindex der dazu verwendeten Vergußmasse und/oder des Kittes weitgehend vernachlässigbar ist.

In dem Ausführungsbeispiel gemäß FIG. 5 ist die Ein- und/ oder Auskopplungsoptik für die Lichtwege 1, 7 als Spiegeloptik ausgebildet. Dazu ist beispielsweise eine Spiegelfläche 21 vorhanden, z.B. eine reflektierende Mantelfläche eines Kreiszylinders, die zusammen mit einer spiegelnden Teilfläche 40 mindestens eine anamorphotisch abbildende Anordnung bildet, so daß Licht in die Lichtwege 1, 7 im wesentlichen verlustfrei aus- bzw. einkoppelbar ist. Ein derartiges Ausführungsbeispiel ist im wesentlichen unabhängig von der Wellenlänge der verwendeten Strahlung. Vorteilhafterweise ist ein derartiges Ausführungsbeispiel einsetzbar für infrarotes Licht im Wellenlängenbereich um 0.8 μm und/oder 1.2 μm, bei dem beispielsweise Glasfaserlichtwellenleiter eine besonders niedrige Durchlaßdämpfung besitzen.

Die Erfindung ist nicht nur auf Licht beschränkt, sondern auch auf elektromagnetische Strahlung anderer Wellenlänge anwendbar. Dabei ist es gegebenenfalls zweckmäßig, andere Beugungsgitter zu verwenden, z.B. Transmissionsgitter oder Kristallgitter.

...

Licentia Patent-Verwaltungs-GmbH
Theodor-Stern-Kai 1

D-6000 Frankfurt (Main) 70

Ulm,    04.06.81
Z13 PTL-UL/Ja/rß
UL 81/48
Aktz.: P 31 22 781.3

Patentansprüche

1. Wellenlängenmultiplexer bzw. Wellenlängendemultiplexer, die ein wellenlängenselektives Element sowie kollimierende und/oder fokussierende Elemente enthalten, dadurch gekennzeichnet, daß in mindestens einem Lichtweg (1) ankommende Strahlung zunächst mindestens eine erste anamorphotisch abbildende Anordnung (2, 41) durchläuft, die mindestens eine reflektierende erste Teilfläche (41) enthält, daß die von der ersten Teilfläche (41) reflektierte Strahlung auf mindestens eine wellenlängenselektierende Anordnung (5) fällt, und daß die dadurch beeinflußte Strahlung mittels mindestens einer zweiten anamorphotisch abbildenden Anordnung (42, 6), die mindestens eine reflektierende zweite Teilfläche (42) enthält, mindestens einem weiterführenden Lichtweg (7) zuführbar ist.

2. Wellenlängenmultiplexer nach Anspruch 1, dadurch gekennzeichnet, daß mindestens eine anamorphotisch abbildende Anordnung mindestens eine Ein- bzw. Auskopplungsanordnung (2, 6) enthält, die aus mindestens einer Kreiszylinderlinse besteht.

...

3. Wellenlängenmultiplexer nach Anspruch 2, dadurch gekennzeichnet, daß die Kreiszylinderlinse einen im wesentlichen radialen Brechzahlprofilgradienten besitzt.

4. Wellenlängenmultiplexer nach Anspruch 2, dadurch gekennzeichnet, daß mindestens eine Ein- bzw. Auskopplungsanordnung (2, 6) als Spiegelfläche (21) ausgebildet ist. (FIG. 5)

5. Wellenlängenmultiplexer nach einem der Ansprüche 1 bis 4, dadurch gekennzeichnet, daß mindestens eine strahlungsdurchlässige Platte (3) vorhanden ist, an der mindestens eine Teilfläche (41, 42) und/oder mindestens eine wellenselektive Anordnung (5) und/oder mindestens eine Ein- und/oder Auskopplungsoptik (2, 6) angebracht sind.

6. Wellenlängenmultiplexer nach einem der Ansprüche 1 bis 5, dadurch gekennzeichnet, daß mindestens eine wellenlängenselektive Anordnung (5) als reflektierendes Beugungsgitter ausgebildet ist, das die gebeugte Strahlung im wesentlichen in einer Beugungsordnung konzentriert.

7. Wellenlängenmultiplexer nach Anspruch 6, dadurch gekennzeichnet, daß das Beugungsgitter als Streifengitter ausgebildet ist.

8. Wellenlängenmultiplexer nach einem der Ansprüche 1 bis 7, dadurch gekennzeichnet, daß mindestens ein Lichtweg (1, 7) als Lichtwellenleiter ausgebildet ist.

9. Wellenlängenmultiplexer nach Anspruch 8, dadurch gekennzeichnet, daß mindestens ein Lichtweg (7) aus einer Vielzahl von Lichtwellenleitern besteht.

...

10. Wellenlängenmultiplexer nach einem oder mehreren der vorhergehenden Ansprüche, dadurch gekennzeichnet, daß eine erste Teilfläche (41) sowie eine zweite Teilfläche (42) zu einer reflektierenden Fläche (40) zusammengefaßt sind.

FIG.1

FIG.2

FIG.3

0067972

FIG.4

FIG.5

Europäisches
Patentamt

## EUROPÄISCHER RECHERCHENBERICHT

EP   82 10 4613

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 454 996  (SIEMENS)<br>* Ansprüche 1,3,8 * | 1,8,9 | G 02 B    7/26<br>G 02 B    5/176 |
| A | EP-A-0 037 787  (INSTRUMENTS)<br>* Ansprüche 1,2,10 * | 1,4-6 | |
| A | US-A-4 274 706  (G.L. TANGONAN)<br>* Zusammenfassung; Figuren 2,4 * | 1 | |
| A | US-A-4 111 524  (W.J. TOMLINSON)<br>* Spalte 2, Zeilen 41-52 * | 6,7 | |
| A | PATENTS ABSTRACTS OF JAPAN, Band 4, Nr. 184, 18. Dezember 1980, Seite 74P41<br>& JP - A - 55 126 831 (RITSUO HASUMI) 10-01-1980  * Seite P42; Zusammenfassung * | 1 | |

-----

|  |  |  | **RECHERCHIERTE SACHGEBIETE (Int. Cl. ³)**<br><br>G 02 B    7/26 |
|---|---|---|---|

Der vorliegende Recherchenbericht wurde für alle Patentansprüche erstellt.

| Recherchenort<br>DEN HAAG | Abschlußdatum der Recherche<br>20-09-1982 | Prüfer<br>PFAHLER R. |
|---|---|---|